Europäisches Patentamt

European Patent Office

Office européen des brevets

(11) Publication number: 0 406 753 A2

# EUROPEAN PATENT APPLICATION

(21) Application number: 90112577.3

(22) Date of filing: 02.07.90

(51) Int. Cl.5: **B29C 33/58**, B29C 33/72

(30) Priority: 06.07.89 IT 4164989

(43) Date of publication of application:
09.01.91 Bulletin 91/02

(84) Designated Contracting States:
DE ES FR

(71) Applicant: Calzaturificio F.lli DANIELI S.p.A.
Via Mazzini 20
I-31031 Caerano San Marco Treviso(IT)

(72) Inventor: Danieli, Diego
Via Beolco
I-31031 Caerano San Marco (Treviso)(IT)
Inventor: Gatto, Bruno
Via Unione 123
I-31050 Fanzolo (Treviso)(IT)
Inventor: Piccolo, Nedo
Via Campagna Maser 10
I-31010 Maser (Treviso)(IT)

(74) Representative: Modiano, Guido et al
MODIANO, JOSIF, PISANTY & STAUB
Modiano & Associati Via Meravigli, 16 16 16
I-20123 Milano(IT)

(54) Machine for spraying mold release products particularly for the molding of elements made of plastic material.

(57) The present invention relates to a machine (1) for spraying release products particularly used in the molding of elements made of plastic material. The machine (1) is suitable, for example, for spraying on half-molds for the molding of soles of items of footwear with deep grooves. It comprises a base (2) to which a supporting clement (6) for a slidable stem (11) is articulated which can also be moved parallel to the axis of articulation (5). A spraying head (17) provided with a plurality of holes (18) is fixed to one end (16) of the stem (11). The spraying head (17) is fed with a liquid mold release product which is sprayed in nebulized form onto the open half-molds prior to each molding operation.

Fig. 1

EP 0 406 753 A2

# MACHINE FOR SPRAYING MOLD RELEASE PRODUCTS PARTICULARLY FOR THE MOLDING OF ELEMENTS MADE OF PLASTIC MATERIAL

The present invention relates to a machine for spraying mold release products, particularly for the molding of elements made of plastic material.

The machine is provided in particular for use during the operations of molding soles for items of footwear of the kind with deep grooves.

It is known that the extraction of soles with deep grooves from the mold, after the molding operation, is performed with some difficulty due in particular to the adhesion of the plastic material to the mold.

This adhesion is particularly marked in the region of the grooves in which the plastic material penetrates between closely arranged raised portions defined on the mold.

In order to obviate this drawback, a particular release product is currently spread or sprayed manually on the mold prior to every molding operation.

In the case of application by spreading, however, the operation is time-consuming, and this negatively affects machine times and consequently the hourly production rates.

In the other case, instead, the assigned operator has a spray can which contains the product which he sprays at the beginning of each molding operation.

However, due to the fact that it is performed manually, the spraying is uneven as regards both the regions affected by the sprayed product and the amount of product used.

The release product furthermore is toxic, which makes it harmful for its users.

The spraying operation, due to the fact that it is performed manually, also negatively affects machine times and production costs.

The aim of the present invention is to provide a machine which can spray release product between the open half-molds of molds for the production of elements made of plastic material prior to every molding operation.

A consequent primary object is to provide a spraying machine which can meter the correct and optimum amount of release product applied on said half-molds.

Another important object is to provide a machine, the actuation whereof is synchronized with the opening of the mold so as to accelerate the molding cycles, thereby reducing machine times.

Still another object is to provide a spraying machine which can apply a uniform film of release product on the surfaces involved in molding.

Yet another object is to avoid the presence of operators proximate to the spraying region in which nebulized toxic product is present.

A further object is to provide a spraying machine which can be produced at low cost with conventional production systems.

This aim, these objects and others which will become apparent hereinafter are achieved by a machine for spraying release products particularly for the molding of elements made of plastic material, characterized in that it comprises a base on which a supporting element is articulated and can move parallel to the axis of articulation, said element supporting a slidable stem, a spray head being fixed to an end of said stem, said spraying head being fed with liquid release product and having a plurality of nebulizing holes from which the product is sprayed onto the open half-molds.

Further characteristics and advantages will become apparent from the detailed description of an embodiment of the invention, illustrated only by way of non-limitative example in the accompanying drawings, wherein:

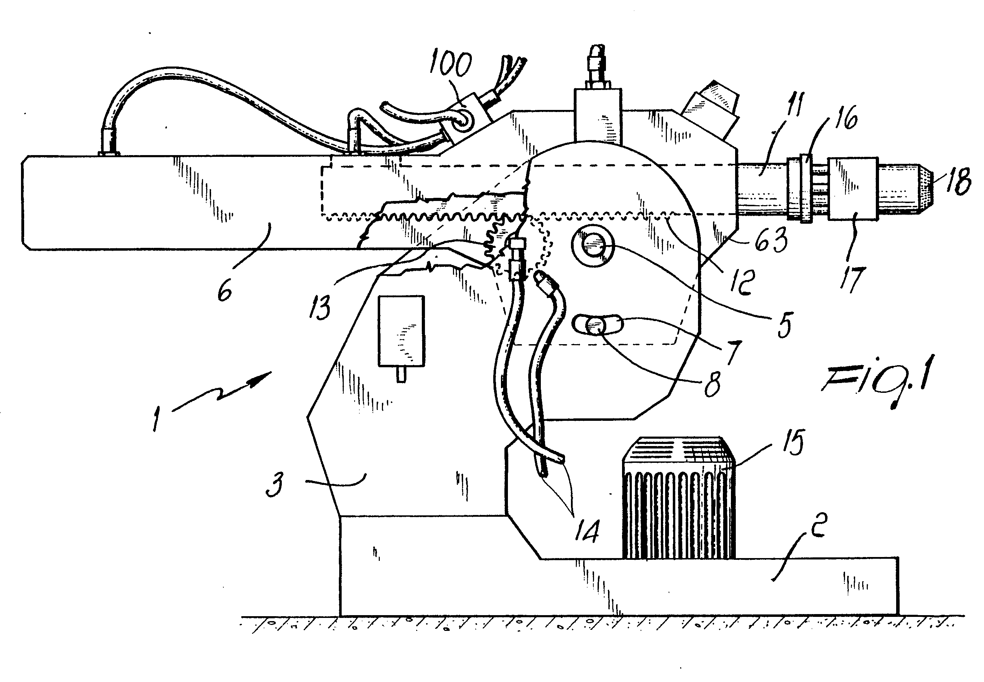

figure 1 is a side view of the spraying machine according to the invention;

figure 2 is a perspective view of the machine of figure 1 during the spraying operation;

figure 3 is a front perspective view of the machine of figure 1;

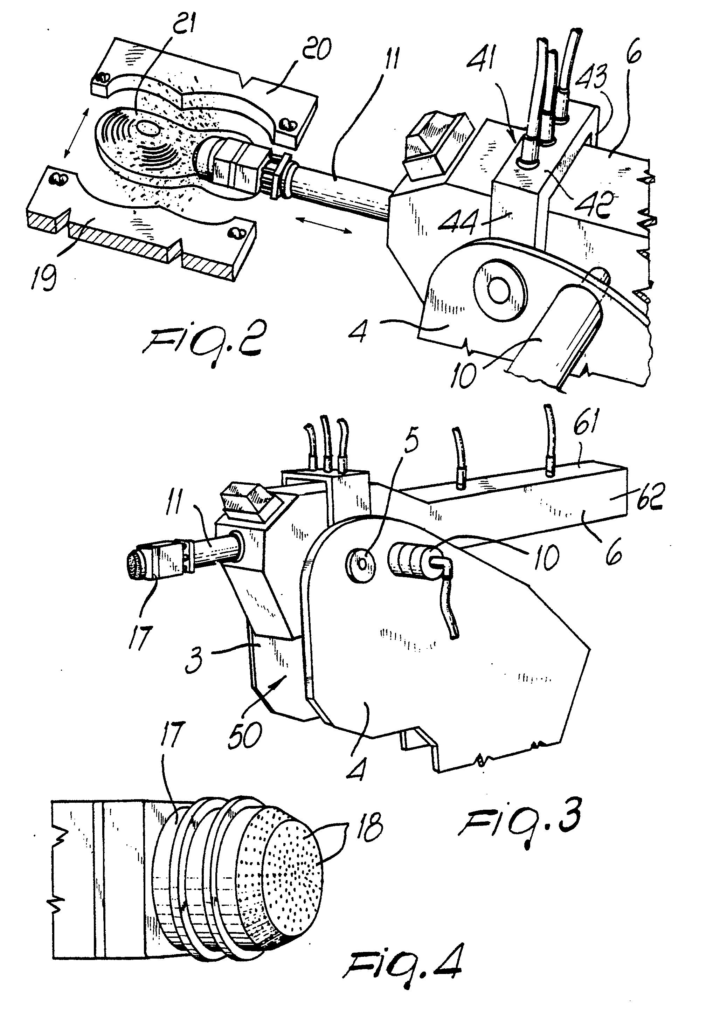

figure 4 is an enlarged perspective detail view of the spraying head comprised in the machine according to the invention; and

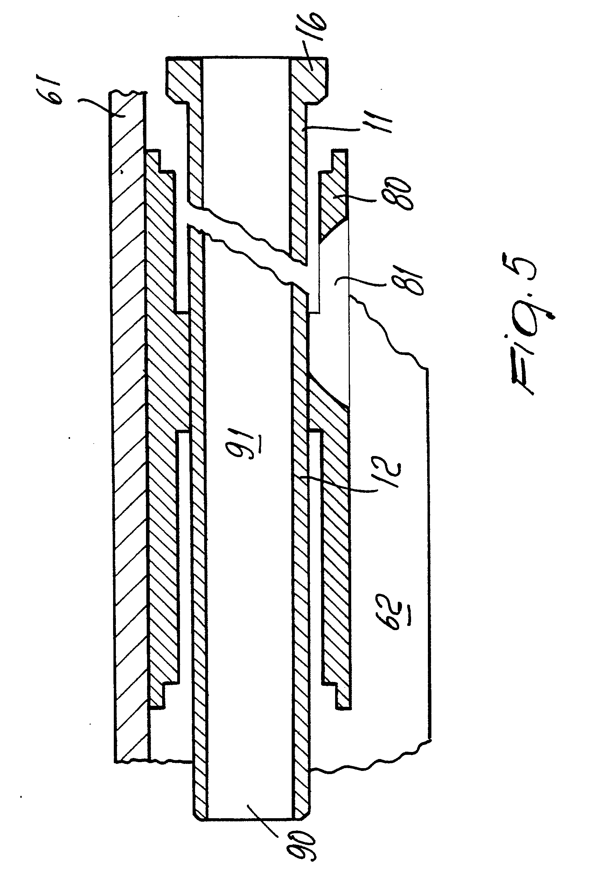

figure 5 is a fragmentary sectional view illustrating the arrangement of the sleeve-like bearing member and tubular stem within the supporting element.

With reference to the above figures, the spraying machine according to the invention is generally indicated by the reference numeral 1 and advantageously comprises a metallic base 2 from which two parallel wings, respectively 3 and 4, extend upward; said wings are expediently made of sheet metal, and a shaped supporting element 6 is articulated on the upper portion of said wings to a pivot 5 which joins said wings; said supporting element has a transverse cross section in the shape of an inverted U and is preferably constituted by welded sheet metal elements.

The angular position of the supporting element 6 with respect to the articulation pivot 5 can be adjusted by virtue of the presence, on said parallel wings 3 and 4, of slotted holes 7 in the shape of an arc of a circle, for fixing in various positions bolt elements 8 rigidly associated with said supporting element 6.

A fluid-actuated piston 10 is mounted on the wing 4 and acts on the supporting element 6 so as to move it in a reciprocating manner in a direction which is orthogonal to its longitudinal axis.

According to the invention, a metallic tubular stem 11 is slidably rigidly associated in a longitudinal position between the wings of said supporting element 6 and is longitudinally provided with a rack 12 by means of which it meshes with a pinion 13 the rotation whereof is actuated, by means of tubes 14, by a hydraulic motor 15 which is located on said base 2.

Said tubular stem 11 has an end 16 which protrudes from said supporting element 6, and a spraying head 17 is rigidly associated therewith; said head has a substantially cylindrical extension and a plurality of holes is provided thereon; release liquid, fed from an appropriate tank which is not illustrated, is sprayed from said holes.

More precisely, the spraying machine according to the invention, generally indicated by the reference numeral 1, comprises a planar base member 2 having rigidly associated therewith two substantially vertical upright members or wings 3, 4, which are arranged substantially parallel to each other and are spaced apart to define an opening 50 therebetween. Wings 3, 4 are upwardly interconnected by means of a connection element 41 having a substantially horizontal transverse portion 42, arranged substantially parallel to the base 2 and defining a longitudinal extension corresponding to the width of the opening 50 defined between the wings 3, 4. A downwardly protruding first lateral element 43 is rigidly associated with one end of the transverse portion 42 and is connected, e.g., by means of bolts, welding etc., to the wing 2. A second lateral element 44, rigidly associated with the opposite end of the transverse portion 42, protrudes downwardly parallel to the first lateral element 43 and is rigidly associated with the wing 44. Thus, the opening 50 defined between the base 2 and the wings 3, 4 is upwardly closed by the connection element 41.

The wings 3, 4, each have formed therein a hole wherein the shaft or pivot 5 is accommodated. The supporting element, generally indicated by the reference numeral 6, is journalled to the pivot 5 and is expediently constituted by an upper plate-like member 61, having downwardly protruding lateral plate-like members 62 rigidly associated therewith to define a downwardly open box-like element. The box-like element or supporting element 6 has a transverse extension which is smaller than the transverse extension of the opening 50 or connection element 41, so as to be laterally displaceable in the opening 50 by first actuating means, which will be described hereinafter.

At least one or preferably both of the wings 3, 4, have formed therein an arcuate slot 7, having a longitudinal axis defining an arc of a circle, the centre whereof coincides with the axis of the pivot 5. Locking members 8 rigidly associated with the supporting element 6 pass through the arcuate slots 7. Thus, transverse movement of the supporting element 6 is permitted through sliding contact engagement between the locking members 8 and the arcuate slots 7, at least when said locking members 8 are released, while oscillation of the supporting element 6 on the pivot 5 is blocked by activation of the locking members. Said locking members 8 may be constituted by any suitable means, such as, e.g., bolt elements or threaded bars rigidly associated with the supporting element 6 and being engaged by nuts, such that the nuts can be slackened and moved along the threaded bar to permit lateral displacement of the supporting element 6 in the opening 50, and then tightened onto the wing once positioning of the supporting element has been effected, thereby preventing oscillation of the supporting element 6 with respect to the wings 3, 4.

First actuating means, advantageously constituted by a fluid-actuated piston 10, mounted on the wing 4 act on the lateral plate-like member 62 of the supporting element 6 for causing lateral displacement of the element 6 with respect to the wings 3, 4. Obviously, in order to permit such lateral displacement, the supporting element 6 may be slideably journalled on the pivot 5, or alternatively, the pivot 5 may be rigidly axially associated with the supporting element 6 and slideably mounted in the holes formed in the wings 3, 4. In this latter case, the pivot 5 must have a longitudinal extension which is at least equal to the overall transverse dimension defined by the wings 3, 4, plus an extension which corresponds to twice the maximum displacement or excursion of the supporting element 6.

In order to permit oscillation of the supporting element 6 with respect to the wings 3, 4 in a vertical plane as well as lateral displacement of the supporting element 6, the fluid-actuated piston 10 may be of the single action type and arranged to laterally push against the lateral plate-like member 62 of the supporting element 6. Thus, the lateral plate-like member 62 is slideably movable with respect to the end of the piston rod, while remaining in constant abutment engagement relationship therewith. Expediently, conventional return means cooperate with the single action fluid-actuated piston 10 mounted on the wing 4 to maintain the constant abutment engagement relationship between the end of the rod of the piston 10 and the lateral plate-like member 62. Such return means may be constituted e.g., by a spring acting between the supporting element 6 and the opposite wing 3, or by a second single action piston, rigidly associated with the opposite wing 3. Alternatively, a double action fluid-actuated piston may be used which is rigidly associated with the wing 4, with suitable connection means provided between the piston rod of such double action fluid-actuated piston and the supporting element 6, such as e.g., an expansion provided on a piston rod and having an annular groove axially engaged by an arcuate slot formation provided on said lateral plate-like member 62, the slot formation being slideable with respect to the expansion in a vertical plane and defining an arc of a circle having a centre point corresponding to the axis of the pivot 5. Obviously, any other suitable connection means may also be employed.

The supporting element 6 has rigidly associated therewith a sleeve-like bearing member 80 having defined on a lower surface thereof an arcuate recess 81. The bearing member 80 slideably accommodates the tubular stem 11 having defined downwardly thereon the rack 12. The portion of the rack 12 overlying the recess 81 is engaged by the pinion 13, which is rotatably journalled to the supporting element 6 and driven by the hydraulic motor 15, through conventional transmission means. Advantageously, the arcuate recess 81 defines a portion of a circumference of a circle, which is concentric to the outer perimeter of the pinion 13 and has its centre located at the rotation axis of said pinion 13.

As mentioned heretofore, with the end 16 of the tubular stem 11 which protrudes from the supporting element 6, there is associated a spraying head 17 bearing a plurality of holes 18 or other atomizing means such as nozzles. The spraying head 17 may be rigidly associated with the end 16, or movably associated therewith, e.g., via rotatable collar coupling means or the like. The opposite end 90 is sealed to define within the tubular stem 11 a chamber 91, which communicates with the plurality of holes 18. A conventional supply tank containing mold release product is connected to the chamber via pipes, defining a conventional metering circuit including a known per se type of pump for metering and controlling the feed of mold release product.

Advantageously, cables means comprising a plurality of cables 100 connect the machine drive mechanisms to photocells which control the excursion of the tubular stem 11 and to the controls for operating the machine, which may be computer operated for controlling atomizer excursion, fluid metering etc. One or more photocells for controlling the excursion of the tubular stem 11 may be mounted, e.g., on a front portion 63 of the supporting element 6.

The operation of the machine, which is actuated and controlled by an appropriate panel which actuates it synchronously with the opening of the mold, as illustrated in figure 2, which shows the open half-rings 19 and 20 of a mold for the production of a sole for footwear and the mold 21 of the tread, comprises a first forward movement of the head toward one of the mold portions, a translatory motion orthogonal to the axis so as to move toward the other mold portion and a final backward motion.

During these movements, the nebulized liquid release product, metered in the correct and optimum amount, is sprayed onto the elements of the mold.

By means of the machine according to the invention it is possible to replace inaccurate and slow manual action with an automatic mechanical action which besides optimizing the spraying effect is also capable of reducing the time between one molding operation and the next.

The use of the machine according to the invention furthermore produces positive effects from the point of view of the health of the operators, who are no longer forced to work with toxic and therefore harmful products.

From what has been described it can thus be seen that the invention has achieved the intended aim and objects.

The invention thus conceived is susceptible to numerous modifications and variations, all of which are within the scope of the inventive concept.

All the details may furthermore be replaced with other technically equivalent elements.

In practice, the materials employed, as well as the dimensions, may be any according to the requirements.

Where technical features mentioned in any claim are followed by reference signs, those reference signs have been included for the sole purpose of increasing the intelligibility of the claims and accordingly such reference signs do not have any limiting effect on the scope of each element identified by way of example by such reference signs.

## Claims

1. Machine for spraying mold release products particularly for the molding of elements made of plastic material, characterized in that it comprises a base on which a supporting element is articulated and can move parallel to the axis of articulation, said supporting element supporting a slidable stem, a spraying head fed with liquid release product being fixed to an end of said stem, said spraying head having a plurality of nebulizing holes from which the product is sprayed onto the open half-molds.

2. Spraying machine according to claim 1, characterized in that two parallel wings made of sheet metal extend vertically upward from said base, said supporting element being arranged between said wings.

3. Spraying machine according to claims 1 and 2, characterized in that said supporting element has a transverse form which is substantially in the shape of an inverted U and is made of mutually welded sheet metal elements.

4. Spraying machine according to one or more of the preceding claims,· characterized in that said supporting element is articulated to a pivot which joins said wings of said base, the angular adjustment of said supporting element being obtained by means of bolt elements which are associated therewith and are rigidly associated with slotted holes provided on said wings.

5. Spraying machine according to one or more of the preceding claims, characterized in that a piston is orthogonally fixed to one of said wings of said base, the stem of said piston actuating said translatory motion parallel to the axis of articulation.

6. Spraying machine according to one or more of the preceding claims, characterized in that said stem is slidable between the wings of said supporting element in the shape of an inverted U, said stem being conveniently tubular and having a longitudinal rack with which a pinion meshes, said pinion being actuated by a hydraulic motor which is fixed to the base, said spraying head being fixed on the protruding end of said stem.

7. Spraying machine according to one or more of the preceding claims, characterized in that said spraying head has a substantially cylindrical extension and is fed with said release liquid which arrives from an appropriate tank.

8. Spraying machine according to one or more of the preceding claims, characterized in that the movements of said spraying head comprise an advancement between the elements of the open mold, a translatory motion in a direction which is orthogonal to said advancement and a backward motion in a direction which is parallel to said advancement.

Fig.1

EP 0 406 753 A2

Fig.2

Fig.3

Fig.4

Fig. 5

EP 0 406 753 A2